# EUROPÄISCHE PATENTSCHRIFT

(11) **EP 2 216 161 B1**
(45) Veröffentlichungstag und Bekanntmachung des Hinweises auf die Patenterteilung: **26.12.2012**
(21) Anmeldenummer: 10153135.8
(22) Anmeldetag: 10.02.2010
(51) Int. Cl.: B29C 49/64, B29B 13/02, B29C 35/08

(54) **Vorrichtung zum Erhitzen von Kunststoffvorformlingen und Verwendung der Vorrichtung**
Device for heating plastic preforms and use of the device
Dispositif de chauffage d'ébauches en plastique et son utilisation

(30) Priorität: 10.02.2009 DE 102009008318
(43) Veröffentlichungstag der Anmeldung: 11.08.2010
(73) Patentinhaber: Krones AG, 93073 Neutraubling (DE)
(72) Erfinder: Deyerl, Heinrich, 92552, Teunz (DE); Haner, Arno, 93109 Wiesent (DE)
(74) Vertreter: Bittner, Bernhard

(56) Entgegenhaltungen:
- EP-A1- 1 779 994
- WO-A1-94/01982
- DE-A1- 4 242 812
- DE-A1- 19 724 621
- DE-A1-102005 061 334

## Beschreibung

Die vorliegende Erfindung bezieht sich auf eine Vorrichtung zum Erhitzen von Gegenständen aus Metall, Glas, Verbundstoff, Kunststoff oder einer Verbindung aus diesen Materialien und insbesondere auf eine Vorrichtung zum Erhitzen von Kunststoffvorformlingen zur Herstellung von Behältnissen. Es wird darauf hingewiesen, dass die Erfindung auch auf andere Gatten von Vorformlingen anwendbar ist. Es wird ferner darauf hingewiesen, dass sich die Erfindung auf Heizstrecken in Heizmodulen von Streckblasmaschinen, Beschichtungen auf metallischen Werkstoffen, insbesondere bei beschichteten Blechen, Reflektoren in den Heizstrecken von Streckblasmaschinen und auf alle weiteren Vorrichtungen zum Erhitzen bzw. Sterilisieren von Kunststoffen mittels IR-Strahlern anwenden lässt.

Aus dem Stand der Technik sind Reflektoren in Öfen/Heizkästen von Streckblasmaschinen bekannt, bei denen Reflektormaterial aus keramischen Werkstoffen verwendet wird.

Aus der WO 2006/002751 A1 ist ein Heizofen für Vorformlinge bekannt. Dieser Heizofen weist Mittel zur Aufnahme und zum Transport der Vorformlinge durch die Vorrichtung auf. Weiterhin ist hier ein Gegenreflektor für die Strahlungsquelle vorgesehen, der an seiner dem Vorformling zugewandten Oberfläche profiliert ist. Durch diese Profilierung wird zwar ein verbesserter Wärmeeintrag in die Vorformlinge erreicht, andererseits ist diese Oberfläche jedoch relativ schwer zu reinigen und daher kann es im Laufe der Zeit durch Verschmutzungen und Oxidation zu Leistungseinbussen kommen.

In der DE 197 24 621 B4 werden ein Verfahren und eine Vorrichtung zur Temperierung von Vorformlingen beschrieben. Dabei werden die Vorformlinge an Heizstrahlern vorbeibewegt und es wird eine Beeinflussung der Heizstrahler durch Fokussierelemente durchgeführt, wobei die Heizstrahlung von einem Primärspiegel auf einen Sekundärspiegel reflektiert wird. Diese Vorgehensweise erlaubt zwar ebenso eine verbesserte Einbringung von Wärme in die Vorformlinge, ist jedoch relativ schwer zu reinigen.

EP 1 779 994 A1 offenbart eine Vorrichtung gemäß dem Oberbegriff des Anspruchs 1.

Ein Problem der aus dem Stand der Technik bekannten Vorrichtungen ist der hohe Energiebedarf, der sich bei der Erhitzung von Kunststoffvorformlingen ergibt.

Der vorliegenden Erfindung liegt daher die Aufgabe zugrunde, die Vorrichtung dahingehend zu optimieren, dass eine wesentliche Verbesserung des Wirkungsgrades erzielt wird und somit Energie eingespart werden kann. Dies wird erfindungsgemäß durch den Gegenstand des unabhängigen Anspruches 1 erreicht.

Vorteilhafte Ausführungsformen und Weiterbildungen sind Gegenstand der Unteransprüche.

Eine erfindungsgemäße Vorrichtung zum Erhitzen von mindestens einem Kunststoffvorformling zum Herstellen von Behältnissen weist einen Reflektionskörper, eine Energiequelle zur Abgabe von Wärmestrahlung zum Erwärmen des Kunststoffvorformlings, und eine Halteeinrichtung zum Halten des Kunststoffvorformlings auf, wobei die Halteeinrichtung relativ zu dem Reflektionskörper bewegbar ist, wobei der Reflektionskörper eine dem Kunststoffvorformling zugeordnete erste Oberfläche aufweist und die Energiequelle derart angeordnet ist, dass deren Strahlung auf den Reflektionskörpers gelangt.

Erfindungsgemäß ist der Reflektionskörper aus wenigstens zwei Komponenten aufgebaut, wobei eine erste Komponente die erste Oberfläche aufweist und für die von der Energiequelle abgegebene Strahlung wenigstens teilweise transparent ist und auf einer der ersten Oberfläche abgewandten Seite eine zweite strukturierte Oberfläche aufweist und wenigstens ein Abschnitt der zweiten Komponente für die Strahlung reflektierend ist und diese zweite Komponente zumindest abschnittsweise an der ersten Komponente anliegt.

Bei der Halteeinrichtung handelt es sich insbesondere um einen Dorn, der in eine Mündung der Vorformlinge hineinragt, um diese zu halten. Es wäre jedoch auch die Verwendung von Greifklammern als Halteeinrichtung denkbar.

Hierbei ist die erste und/oder die zweite Oberfläche der ersten Komponente strukturiert ausgebildet, wobei die erste Oberfläche bevorzugt glatt ausgebildet ist. Durch diese erfindungsgemäße Vorgehensweise wird erreicht, dass einerseits die den Vorformlingen zugewandte Oberfläche leicht zu reinigen ist, andererseits jedoch auch die Vorteile der strukturierten Oberfläche im Hinblick auf Reflektions- und Fokussierungswirkungen erreicht werden können.

Die zweite Komponente liegt entweder an der ersten oder bevorzugt an der zweiten Oberfläche der ersten Komponente an, d.h., dass die zweite Komponente vorteilhaft zumindest abschnittsweise an die erste und/oder die zweite Oberfläche der ersten Komponente strukturell angepasst ist.

Die Vorrichtung ist hierbei zumindest teilweise ein Ofen oder Heizkasten mittels dem die Vorformlinge bestehend aus Kunststoff, vorzugsweise PET, PS, PC etc. erhitzt werden, um nachfolgend zu Behältern oder Flaschen weiterverarbeitet zu werden.

Als eine glatte Oberfläche werden hierbei insbesondere flächenförmige Oberflächen verstanden. Diese Oberflächen können zylinderförmig, eben oder kegelförmig ausgeführt sein und weisen bevorzugt eine mittlere Rauheit von weniger als 10 µm , bevorzugt von weniger als 2 µm und besonders bevorzugt von weniger als 0,5 µm, besonders bevorzugt von weniger als 0,1 µm und besonders bevorzugt von weniger als 0,02 µm auf.

In einer weiteren bevorzugten Ausführungsform der vorliegenden Erfindung weist die zweite Komponente eine Schicht auf, deren Material aus einer Gruppe von Materialien ausgewählt ist, welche Aluminium, Chrom, Nickel, Kupfer, Gold und/oder mindestens eine Legierung aus mindestens einem dieser Metalle enthält. Dies ist vorteilhaft, da die zuvor genannten Materialien bzw. Legierungen hoch reflektierende Eigenschaften besitzen. Ferner ist denkbar, dass die zweite Komponente nicht aus einer Schicht, sondern aus einem Festkörper besteht, der in seiner Struktur an die Struktur der ersten Komponente angepasst ist und somit an dieser anliegen kann. Weiterhin ist vorstellbar, dass dieser Festkörper polierte Oberflächenbereiche aufweist, wodurch die Reflektionswirkung weiter erhöht wird. Die zweite Komponente kann ferner aus einem Festkörper bestehen oder eine Schicht aufweisen, deren Material ein keramisches Material ist bzw. aus einer Kombination aus mehreren keramischen Materialien besteht und/oder deren Material ein Kunststoff ist bzw. aus einer Kombination aus mehreren Kunststoffen besteht. Als keramische Materialien können hierbei z. B. Silicatkeramiken, oxidische Keramiken, wie z.B. Aluminiumoxid, Berylliumoxid, oder nicht oxidische Keramiken, wie z. B. Siliciumcarbid, Bornitrid, Borcarbid, und andere verwendet werden. Als Kunststoffe können z.B. Polyethylen, Polypropylen, Polyvinylchlorid, Polystyrol, Polyurethan, Polyethylenterephthalat verwendet werden.

In einer weiteren bevorzugten Ausführungsform der vorliegenden Erfindung ist die zweite Komponente mittels einer Kühlvorrichtung kühlbar. Dies ist vorteilhaft, da so einer Überhitzung der Vorrichtung und nachgelagerter Komponenten entgegengewirkt werden kann.

In einer weiteren bevorzugten Ausführungsform der vorliegenden Erfindung stellt die Kühlvorrichtung Fluide, wie beispielsweise Öl oder Schutzgas (CO₂) zum Kühlen der zweiten Komponente bereit. Dies ist vorteilhaft, da durch diese Fluide vereinfacht Wärme aus der Vorrichtung abgeführt werden kann und durch diese Fluide ein Schutz der zweiten Komponente vor Oxidation und Verunreinigungen entsteht.

Bei einer weiteren bevorzugten Ausführungsform der vorliegenden Erfindung besteht die erste Komponente aus Glas insbesondere aus Quarzglas oder weist Glas bzw. Quarzglas auf und ist bevorzugt als mindestens eine Scheibe, Pressglas oder mehrere Glassegmente ausgebildet. Hierbei ist es möglich, dass das Glas auch aus anderen glasartigen bzw. auf unterschiedlichen Grundkonfigurationen beruhenden Glasvarianten herstellbar ist. Ferner sei angemerkt, dass die Glassegmente, die Scheibe und das Pressglas in unterschiedlicher Form, d.h. je nach Einsatzzweck ausgeführt werden können. Dies hat den Vorteil, dass für die unterschiedlichsten Einsatzbereiche Möglichkeiten zur Anwendung der erfindungsgemäßen Vorrichtung gegeben sind.

In einer weiteren bevorzugten Ausführungsform der vorliegenden Erfindung ist die strukturierte Oberfläche der ersten Komponente zumindest in horizontaler und/oder vertikaler und/oder diagonaler Lage prismen- und/oder parabolförmig ausgebildet. Dies hat den Vorteil, dass je nach Bedarf eine beliebige Kombination aus Prismen und/oder Parabolen in beliebiger Orientierung und Lage vorgesehen werden können. Es ist ferner denkbar, dass die strukturierte Oberfläche der ersten Komponente auch mit Zacken und Kanten, d.h. teilweise auch mit ebenen Abschnitten ausgeführt sein kann.

Ein weiterer Vorteil, der durch die strukturierte Oberfläche entsteht, ist, dass dadurch die Fläche vergrößert wird, über die Wärme aus dem Reflektionskörper abgeführt werden kann.

In einer weiteren bevorzugten Ausführungsform der vorliegenden Erfindung ist die Energiequelle mindestens ein IR-Strahler. Dies hat den Vorteil, dass gezielt Wärmeenergie mittels Wärmestrahlung emittiert werden kann. Die zuvor bzw. im Folgenden genannten metallischen und keramischen Werkstoffe sowie die genannten Kunststoffwerkstoffe können einzeln oder in Kombination als Werkstoff für den Heizstrahler oder Bestandteile desselben verwendet werden.

In einer weiteren vorteilhaften Ausführungsform der vorliegenden Erfindung ist der mindestens eine Infrarotstrahler zwischen der ersten Komponente und dem Kunststoffvorformling angeordnet und bevorzugt als Röhre oder ähnliches ausgeführt. Dies führt dazu, dass der Vorformling Infrarotstrahlen ausgesetzt ist, die direkt von dem Infrarotstrahler emittiert werden, und zusätzlich Infrarotstahlen ausgesetzt ist, die von der zweiten Komponente reflektiert werden. Hierbei ist weiterhin denkbar, dass der Infrarotstrahler in dem gleichen Abstand wie der Vorformling, zu der ersten Komponente beabstandet angeordnet ist.

Weiterhin erfolgt durch die Wärmestrahlung eine gute Durchwärmung des Vorformlings, dies bedeutet, dass dessen Innentemperatur und die Außentemperatur sehr nahe beieinander liegen.

In einer weiteren bevorzugten Ausführungsform der vorliegenden Erfindung ist ein weiterer Reflektionskörper vorgesehen. Dieser weitere Reflektionskörper kann entsprechend dem ersten Reflektionskörper ausgebildet sein, wodurch sich Kosten bei der Herstellung aufgrund von Gleichteilen reduzieren lassen. Es ist jedoch auch möglich, alle zuvor angedachten Eigenschaften des Reflektionskörpers, wie zum Beispiel die Struktur, Zusammensetzungen, Oberflächenbeschaffenheit und Form der verwendeten Komponenten, beliebig anzupassen. Bevorzugt werden die Vorformlinge zwischen dem ersten Reflektionskörper 12 und dem zweiten Reflektionskörper geführt. Besonders bevorzugt sind hierbei die beiden Reflektionskörper jeweils im Wesentlichen gleich weit von den Vorformlingen beabstandet.

In einer weiteren bevorzugten Ausführungsform der vorliegenden Erfindung ist die zweite Komponente undurchlässig gegenüber langwelligen, insbesondere infraroten Strahlen. Dies hat den Vorteil, dass zum Beispiel Infrarotstrahlen reflektiert werden.

In einer weiteren bevorzugten Ausführungsform der vorliegenden Erfindung ist mindestens eine weitere Halteeinrichtung zum Halten von Vorformlingen vorgesehen. Dies hat den Vorteil, dass mehrere Vorformlinge zeitgleich bzw. überlappend oder nacheinander in die Vorrichtung eingebracht werden können bzw. durch die Vorrichtung geführt werden können, hierdurch lässt sich eine Beschleunigung des Bearbeitungsprozesses erzielen.

Bevorzugt ist eine Vielzahl von Halteeinrichtungen vorgesehen. Bevorzugt ist eine Transporteinrichtung vorgesehen, welche die Vorformlinge transportiert und an dieser Transporteinrichtung ist eine Vielzahl von Halteeinrichtungen angeordnet. So kann es sich bei der Transporteinrichtung beispielsweise um eine Transportkette handeln, an der eine Vielzahl von Halteeinrichtungen, beispielsweise in Form von Haltedornen, angeordnet ist

In einer weiteren bevorzugten Ausführungsform der vorliegenden Erfindung ist eine Transporteinrichtung zum Bewegen der Halteeinrichtung vorgesehen. Dies hat den Vorteil, dass mittels einer Steuereinheit die Transporteinrichtung und somit die Position der Vorformlinge derart gesteuert werden kann, dass der Erhitzungsprozess hinsichtlich der Erwärmung und der Durchflussrate optimierbar ist.

Die vorliegende Erfindung bezieht sich weiterhin auf die Verwendung einer Vorrichtung der oben beschriebenen Art zum Erhitzen von Kunststoffvorformlingen zum Herstellen von Behältnissen.

Die vorliegende Erfindung ist weiterhin auf eine Anlage zum Herstellen von Kunststoffbehältnissen gerichtet, welche eine Vorrichtung der oben beschriebenen Art aufweist sowie eine in einer Transportrichtung der Vorformlinge stromabwärts bezüglich der Vorrichtung angeordnete Umformungseinrichtung zum Umformen der Kunststoffvorformlinge zu Kunststoffbehältnissen. Bei dieser Umformungseinrichtung kann es sich beispielsweise um eine Blasmaschine und insbesondere um eine Streckblasmaschine handeln.

Weitere Vorteile und Ausführungsformen ergeben sich aus den beigefügten Zeichnungen:

Darin zeigen:
- Fig. 1: eine Seitenansicht einer erfindungsgemäßen Vorrichtung zum Erhitzen von Vorformlingen;
- Fig. 2a: einen erfindungsgemäßen Reflektionskörper, wobei die zweite Komponente auf der strukturierten Oberfläche der ersten Komponente angeordnet ist;
- Fig. 2b: einen erfindungsgemäßen Reflektionskörper, wobei die zweite Komponente auf der glatten Oberfläche der ersten Komponente angeordnet ist;
- Fig. 3a: ein Ausführungsbeispiel der ersten Komponente (Gussglas);
- Fig. 3b: ein Ausführungsbeispiel der ersten Komponente (Fräsglas);
- Fig. 4a: ein erstes Ausführungsbeispiel der ersten Komponente als Pressglas; und
- Fig. 4b: ein zweites Ausführungsbeispiel der ersten Komponente als Pressglas.

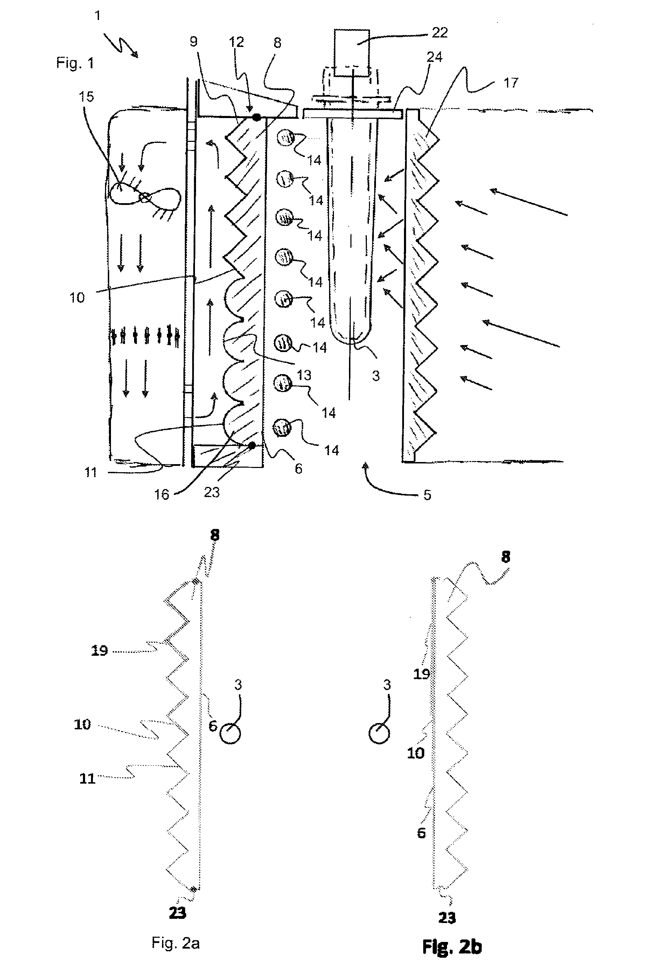

In Fig. 1 ist eine Kühlung 15 gezeigt, welche durch eine Zirkulation mindestens eines Fluides Wärme aus der Vorrichtung insbesondere aus der ersten bzw. zweiten Komponente 10 abführt. Hierzu einsetzbare Fluide können bekannte Schutzgase insbesondere CO₂ aber auch Luft und andere Gasgemische bzw. Gase sein. Ferner ist vorstellbar, dass auch Flüssigkeiten, wie Öl, Kühlmittel oder Wasser, welches entsprechend den jeweiligen Randbedingungen mit Additiven versetzt sein kann, eingesetzt wird.

Durch den Einsatz geeigneter Fluide kann die Oxidation bzw. Verunreinigung der kritischen Oberflächen, wie der ersten Komponente 8 und/oder der zweiten Komponente 10, vermieden bzw. reduziert werden, wodurch die Reflektionseigenschaften der Vorrichtung 1 bzw. des Reflektionskörpers 12 erhalten bleiben. In der aus der Fig. 1 ersichtlichen Ausführungsform ist zwischen der zweiten Komponente 10 und dem Fluid keine weitere Komponente in Form einer Schicht oder eines Festkörpers angeordnet, was jedoch auch vorstellbar ist. Weiterhin ist es denkbar, die zweite Komponente 10 auf der zweiten Oberfläche 11 der ersten Komponente 8 anzuordnen und wiederum hieran eine weitere Komponente anzuordnen. Die weitere Komponente kann hierbei eine Beschichtung darstellen.

Der Reflektionskörper 12 weist eine erste und eine zweite Komponente 8, 10 auf und ist an der zu den Infrarotstrahlern 14 zugewandten Seite glatt ausgebildet. Auf der von den Infrarotstrahlern 14 abgewandten Seite weist die erste Komponente 8 eine Strukturierung auf. Die Strukturierung ist hierbei in einem ersten Bereich 9 der Vorrichtung 1 exemplarisch zackenförmig und in einem zweiten Bereich 13 exemplarisch parabolförmig ausgebildet. Hierbei sei angemerkt, dass zum einen weitere Formvarianten, wie zum Beispiel prismenförmige Strukturanteile, in einer solchen Kombination vorgesehen sein können. Eine Kombination aus mindestens zwei verschiedenen Strukturanteilen kann hierbei durch unterschiedlich große Strukturanteile einer einzelnen Form aber auch durch eine beliebig aneinander gereihte bzw. ineinander übergehende Vielzahl unterschiedlicher Strukturen gegeben sein. Ferner ist denkbar, dass auch Strukturelemente vorhanden sind, die parallel zu den glatten Oberflächenbereichen der ersten Komponente 8 angeordnet und ausgeführt sind, d.h. eben bzw. glatt ausgeführt sind. Bevorzugt wird jedoch eine einheitliche Strukturierung verwendet.

Die IR-Strahler 14 sind derart zwischen dem Reflektionskörper 12 und der vorbestimmten Position des Vorformlings 3 angeordnet, dass sie zum einen den Vorformling 3 direkt anstrahlen und zum anderen über den Reflektionskörper 12 den Vorformling 3 indirekt anstrahlen.

Das Bezugzeichen 22 bezieht sich auf eine Halteeinrichtung für die Vorformlinge, die, wie im Stand der Technik bekannt, als Dorn ausgeführt ist, der in die Mündung der Behältnissen hineinragt. Die Halteeinrichtung 22 ist in der in Fig. 1 gezeigten Ausführungsform derart gestaltet, dass mittels Formschluss ein Vorformling 3 in den Bearbeitungsbereich bzw. Erhitzungsbereich 5 eingeführt wird.

Vorteilhaft ist hierbei, dass eine plattenförmig ausgebildete Abschirmung 24 auch eine Hitzeschutzplatte darstellt, wodurch der Wärmeübergang aus dem Bearbeitungsbereich heraus reduziert wird. Vorteilhaft ist weiterhin, dass durch die Hitzeschutzplatte bzw. Abschirmung 24 eine Erwärmung des Vorformlingkopfes d.h. des Gewindebereichs nicht erfolgt. Die Abschirmung ist dabei bevorzugt stationär angeordnet

Ferner können ein oder mehrere weitere Reflektionskörper 17 vorgesehen sein, für die entsprechend des ersten Reflektionskörpers 12 die gleichen Ausgestaltungsbedingungen gelten. Es sei allerdings darauf hingewiesen, dass der erste Reflektionskörper 12 und die weiteren Reflektionskörper 17 nicht identisch ausgeführt werden müssen. Sollten mehrere Reflektionskörper 12,17 vorgesehen sein, so ist es denkbar, dass die IR-Strahler 14 versetzt angeordnet sind. Die Wärmeeinbringung kann durch eine beliebige Anordnung der IR-Strahler 14 derart gesteuert werden, dass je nach Anwendung eine gleichmäßige bzw. ungleichmäßige Erwärmung des Vorformlings 3 erreichbar ist. Die Steuerung erfolgt hierbei über eine Steuereinrichtung (nicht gezeigt) mittels derer die Temperatur bzw. Wärmeemission der einzelnen bzw. aller IR-Strahler 14 gesteuert werden kann, und die es erlaubt die Bewegung des Halters 22 zu steuern.

In Fig. 2a ist ein Reflektionskörper 12 gezeigt, dessen erste Oberfläche 6 glatt ausgeführt ist und dessen zweite Oberfläche 11 strukturiert ausgeführt ist. Die Strukturierung ist hierbei gleichförmig und zackig ausgebildet. Auf der zweiten Oberfläche 11 des Reflektionskörpers 12 ist eine zweite Komponente 10 angeordnet und auf der zweiten Komponente 10 ist eine weitere Komponente 19 aufgebracht, welche die zweite Komponente 10 vor Oxidation und/oder Verschmutzung schützt. Das Bezugszeichen 3 kennzeichnet auch hier zur Veranschaulichung ein Behältnis bzw. einen Kunststoffvorformling.

Aus Fig. 2b ist ersichtlich, dass auf der ersten Oberfläche 6 der ersten Komponente 8 zunächst eine zweite Komponente 10 zumindest abschnittsweise mit der ersten Komponente 8 in Kontakt gebracht ist. Ferner ist ersichtlich, dass mit der zweiten Komponente 10 eine weitere Komponente 19 in Kontakt gebracht ist. Die Oberflächen der einzelnen Komponenten sind strukturell aneinander angepasst. Die weitere Komponente 19 ist hierbei als Schutzschicht ausgeführt, die die zweite Komponente 10 vor Oxidation und Verschmutzung schützt. Durch das Bezugszeichen 23 werden Mittel zur Befestigung der Reflektionskörper 12, 17 in der Vorrichtung 1 gekennzeichnet. Es sei ferner angemerkt, dass zwischen der ersten und der zweiten Komponente 8, 10 und auf der weiteren Komponente 19 weitere Beschichtungen aufbringbar sind, solange die reflektierenden Eigenschaften des jeweiligen Reflektionskörpers 12, 17 nicht negativ beeinträchtigt sind.

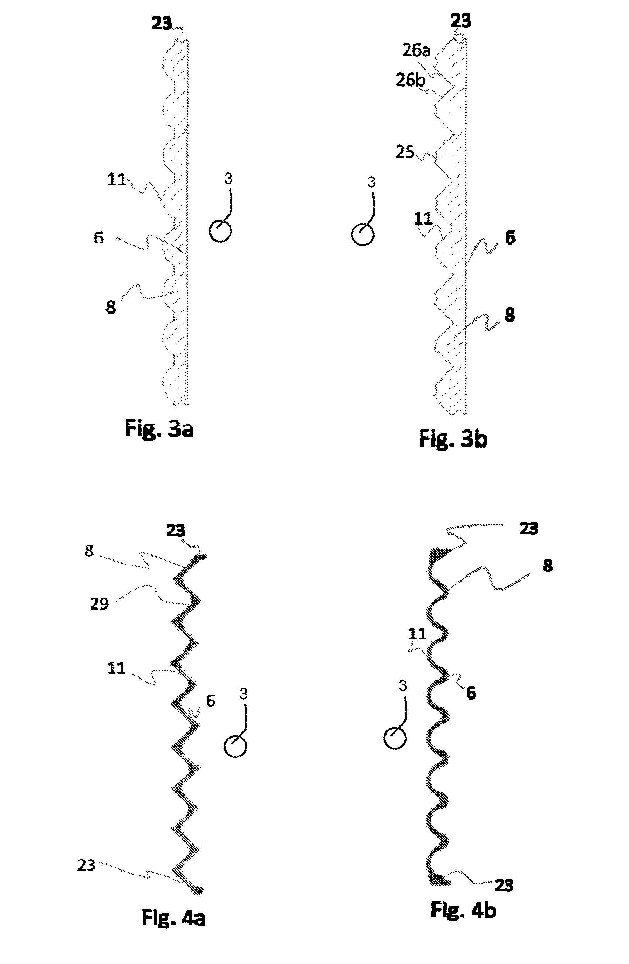

In Fig. 3a ist die erste Komponente 8 aus Gussglas gefertigt und weist eine erste glatte Oberfläche 6 und eine zweite strukturierte Oberfläche 11 auf. Die zweite Oberfläche 11 ist durch parabolische Erhebungen gekennzeichnet, die mindestens 1 mm voneinander durch eine im Wesentlichen parallel zur glatten Oberfläche 6 ausgeführtes Verbindungsstück miteinander verbunden sind. Dieses Verbindungsstück ist in der dargestellten Variante eben ausgeführt. Auf der Oberfläche 11 kann wiederum eine reflektierende Beschichtung vorgesehen sein oder auch, wie dargestellt, ein anderer reflektierender Körper.

In Fig. 3b ist eine weitere erste Komponente 8 dargestellt, die aus Fräsglas hergestellt ist. Hierbei ist wiederum eine erste glatte Oberfläche 6 und eine zweite strukturierte Oberfläche 11 vorhanden. Die strukturierte Oberfläche 11 besteht aus Zacken, deren Flanken, d.h. eine Flanke 26a eines ersten Zackens und eine weitere dazu geneigte Flanke 26b eines zweiten Zackens in einem Winkel von mindestens 70°, bevorzugt von mindestens 75° und besonders bevorzugt von mindestens 80° zueinander ausgerichtet sind. Die Spitzen der Zacken sind abgerundet. Hierbei sind insbesondere Abrundungen mit einem Radius von 2,5 - 6 mm bevorzugt.

In Fig. 4a ist eine erste Komponente 8 dargestellt, die aus Pressglas hergestellt ist. Die erste Komponente 8 weist hierbei eine erste strukturierte Oberfläche 6 und eine zweite strukturierte Oberfläche 11 auf. Beide Oberflächen 6, 11 sind zackig ausgebildet und weisen in den Tälern 29 Rundungen auf. Wie auch bei den zuvor beschriebenen Ausführungsvarianten ist es hier möglich, die zweite Komponente 10 auf der ersten oder der zweiten Oberfläche 6, 11 anzuordnen. Auf der zweiten Komponente 10 kann wiederum je nach Bedarf eine weitere Komponente 19 angeordnet sein.

Entsprechend der in Fig. 4a gezeigten Ausführungsform ist in Fig. 4b wieder eine erste Komponente 8 in Form eines Pressglases dargestellt. Entgegen der in der Fig. 4a gezeigten Darstellungsform weist die in der Fig. 4b gezeigten Darstellungsform keine Zacken auf, sondern lediglich Rundungen. Die Rundungen können hierbei mit dem gleichen Radius versehen sein, es ist jedoch auch möglich, dass wie gezeigt, unterschiedliche Radien vorgesehen sind.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 3: (Kunststoff-) Vorformling
- 5: Erhitzungsbereich
- 6: erste Oberfläche
- 8: erste Komponente
- 9: erster Bereich
- 10: zweite Komponente
- 11: zweite Oberfläche
- 12: Reflektionskörper
- 13: zweiter Bereich
- 14: Energiequelle, Infrarot-Strahler
- 15: Kühlung
- 17: weiterer Reflektionskörper
- 19: weitere Komponente
- 22: Halteeinrichtung
- 23: Verbindungsmittel
- 24: Abschirmung, Abschirmplatte
- 25: Abrundungen
- 26a,b: zueinander geneigte Flanken
- 29: Tal

## Patentansprüche

1. Vorrichtung zum Erhitzen von mindestens einem Kunststoffvorformling (3) zum Herstellen von Behältnissen, mit einem Reflektionskörper (12), mit einer Energiequelle (14) zur Abgabe von Wärmestrahlung zum Erwärmen des Kunststoffvorformlings (3), mit einer Halteeinrichtung (22) zum Halten des Kunststoffvorformlings (3), wobei die Halteeinrichtung (22) relativ zu dem Reflektionskörper (12) bewegbar ist, wobei der Reflektionskörper eine dem Kunststoffvorformling (3) zugeordnete erste Oberfläche (6) aufweist und die Energiequelle (14) derart angeordnet ist, dass deren Strahlung auf den Reflektionskörper (12) gelangt, wobei
der Reflektionskörper (12) aus wenigstens zwei Komponenten (8, 10) aufgebaut ist, wobei eine erste Komponente (8) die erste Oberfläche (6) aufweist, und für die von der Energiequelle (14) abgegebene Strahlung wenigstens teilweise transparent ist, und auf einer der ersten Oberfläche (6) abgewandten Seite eine zweite Oberfläche (10) aufweist und wenigstens ein Abschnitt der zweiten Komponente (10) für die Strahlung reflektierend ist und diese zweite Komponente zumindest abschnittsweise an der ersten Komponente anliegt, **dadurch gekennzeichnet, dass** die zweite Oberfläche strukturiert ist.

2. Vorrichtung nach Anspruch 1,
**dadurch gekennzeichnet, dass**
die zweite Komponente (10) eine Schicht aufweist, deren Material aus einer Gruppe von Materialien ausgewählt ist, welche Aluminium, Chrom, Nickel, Kupfer, Gold und/oder mindestens eine Legierungen aus mindestens einem dieser Metalle enthält und/oder deren Material ein keramisches Material ist bzw. aus einer Kombination aus mehreren keramischen Materialien besteht und/oder deren Material ein Kunststoff ist bzw. aus einer Kombination aus mehreren Kunststoffen besteht.

3. Vorrichtung nach mindestens einem der vorangegangenen Ansprüche,
**dadurch gekennzeichnet, dass**
die zweite Komponente (10) mittels einer Kühlvorrichtung (22) kühlbar ist.

4. Vorrichtung nach Anspruch 3,
**dadurch gekennzeichnet, dass**
die Kühlvorrichtung (22) Fluide wie beispielsweise Öl oder Schutzgas zum Kühlen der zweiten Komponente (12) bereitstellt.

5. Vorrichtung nach Anspruch 1,
**dadurch gekennzeichnet, dass**
die erste Komponente (8) aus Glas insbesondere aus Quarzglas besteht und bevorzugt als mindestens eine Scheibe, Pressglas oder mehrere Glassegmente ausgebildet ist.

6. Vorrichtung nach mindestens einem der vorangegangenen Ansprüche,
**dadurch gekennzeichnet, dass**
die strukturierte Oberfläche (10) der ersten Komponente (8) zumindest in horizontaler und/oder vertikaler und/oder diagonaler Lage prismen- und/oder parabolförmig ausgebildet ist.

7. Vorrichtung nach Anspruch 1,
**dadurch gekennzeichnet, dass**
die Energiequelle (14) mindestens ein IR-Strahler ist.

8. Vorrichtung nach Anspruch 7
**dadurch gekennzeichnet, dass**
der mindestens eine IR-Strahler zwischen der ersten Komponente (8) und dem Kunststoffvorformling (3) angeordnet ist.

9. Vorrichtung nach Anspruch 1,
**dadurch gekennzeichnet, dass**
ein weiterer Reflektionskörper (17) vorgesehen ist.

10. Vorrichtung nach mindestens einem der vorangegangenen Ansprüche,
**dadurch gekennzeichnet, dass**
die zweite Komponente (10) undurchlässig gegenüber langwelligen Strahlen ist.

11. Vorrichtung nach Anspruch 1,
**dadurch gekennzeichnet, dass**
mindestens eine weitere Halteeinrichtung zum Halten von Vorformlingen (3) vorgesehen ist.

12. Vorrichtung nach Anspruch 1,
**dadurch gekennzeichnet, dass**
eine Transporteinrichtung zum Bewegen der Halteeinrichtung (22) vorgesehen ist.

13. Verwendung einer Vorrichtung nach wenigstens einem der vorangegangenen Ansprüche zur Erwärmung von Kunststoffvorformlingen (3).

## Claims

1. An apparatus for heating at least one plastic preform (3) for producing containers, including a reflection body (12), including a source of energy (14) for emitting thermal energy for heating the plastic preform (3), including holding means (22) for holding the plastic preform (3), wherein the holding means (22) may be moved relative to the reflection body (12), wherein the reflection body has a first surface (6) allocated to the plastic preform (3) and the source of energy (14) is disposed in such a way that the radiation thereof reaches the reflection body (12), wherein the reflection body (12) is constructed from at least two components (8, 10), wherein a first component (8) has the first surface (6) and is at least partially transparent to the radiation emitted by the source of energy (14), and has on the side facing away from the first surface (6) a second surface (10), and wherein at least a portion of the second component (10) is capable of reflecting the radiation and this second component abuts against the first component at least in sections,
**characterised in that** the second surface is structured.

2. The apparatus as claimed in Claim 1, **characterised in that** the second component (10) has a coating, the material of which is selected from a group of materials including aluminium, chromium, nickel, copper, gold and/or at least one alloy including at least one of these metals and/or the material of which is a ceramic material or a combination of several ceramic materials and/or the material of which is a plastic or a combination of several plastics.

3. The apparatus as claimed in at least one of the preceding claims, **characterised in that** the second component (10) may be cooled by means of a cooling device (22).

4. The apparatus as claimed in Claim 3, **characterised in that** the cooling device (22) provides fluids such as for example oil or a protective gas for cooling the second component (12).

5. The apparatus as claimed in Claim 1, **characterised in that** the component (8) consists of glass, in particular quartz glass, and is preferably formed of at least one sheet, moulded glass or several glass segments.

6. The apparatus as claimed in at least one of the preceding claims, **characterised in that** the structured surface (10) of the first component (8) is prism- and/or parabola-shaped at least in a horizontal and/or a vertical and/or a diagonal position.

7. The apparatus as claimed in Claim 1, **characterised in that** the source of energy (14) is at least one IR radiator.

8. The apparatus as claimed in Claim 7, **characterised in that** the at least one IR radiator is disposed between the first component (8) and the plastic preform (3).

9. The apparatus as claimed in Claim 1, **characterised in that** a further reflection body (17) is provided.

10. The apparatus as claimed in at least one of the preceding claims, **characterised in that** the second component (10) is opaque to long-waved radiation.

11. The apparatus as claimed in Claim 1, **characterised in that** at least one further holding means for holding preforms (3) is provided.

12. The apparatus as claimed in Claim 1, **characterised in that** a transport device for moving the holding means (22) is provided.

13. Use of an apparatus as claimed in at least one of the preceding claims for heating plastic preforms (3).

## Revendications

1. Installation de chauffage d'au moins une préforme en matière plastique (3) pour la fabrication de récipients, comportant un corps réfléchissant (12), une source d'énergie (14) pour la diffusion d'un rayonnement thermique destiné à chauffer la préforme en matière plastique (3), un dispositif de maintien (22) destiné à maintenir la préforme en matière plastique (3), le dispositif de maintien (22) étant déplaçable par rapport au corps réfléchissant (12), le corps réfléchissant présentant une première surface (6) affectée à la préforme en matière plastique (3) et la source d'énergie (14) étant disposée de telle manière que son rayonnement est incident sur le corps réfléchissant (12), le corps réfléchissant (12) étant constitué d'au moins deux composants (8, 10), un premier composant (8) présentant la première surface (6) au moins partiellement transparente pour le rayonnement diffusé par la source d'énergie (14), et présentant une deuxième surface (10) sur un côté distant de la première surface (6), au moins une partie du deuxième composant (10) étant réfléchissante pour le rayonnement, et ledit deuxième composant étant au moins partiellement en contact avec le premier composant, **caractérisée en ce que** la deuxième surface est structurée.

2. Installation selon la revendication 1,
**caractérisée en ce que**
le deuxième composant (10) comporte une couche dont le matériau est sélectionné dans un groupe de matériaux contenant l'aluminium, le chrome, le nickel, le cuivre, l'or et/ou au moins un alliage d'au moins un desdits métaux, et/ou dont le matériau est un matériau céramique ou est constitué d'une combinaison de plusieurs matériaux céramiques, et/ou dont le matériau est un matériau plastique ou est constitué d'une combinaison de plusieurs matériaux plastiques.

3. Installation selon au moins une des revendications précédentes,
**caractérisée en ce que**
le deuxième composant (10) peut être refroidi au moyen d'un dispositif de refroidissement (22).

4. Installation selon la revendication 3,
**caractérisée en ce que**
le dispositif de refroidissement (22) délivre des fluides tels que de l'huile ou un gaz de protection pour le refroidissement du deuxième composant (12).

5. Installation selon la revendication 1,
**caractérisée en ce que**
le premier composant (8) est constitué de verre, en particulier de verre de silice et est préférentiellement réalisé sous la forme d'au moins une vitre, de verre moulé ou de plusieurs segments de verre.

6. Installation selon au moins une des revendications précédentes,
**caractérisée en ce que**
la surface (10) structurée du premier composant (8) est réalisée avec une forme prismatique et/ou parabolique, au moins en position horizontale et/ou verticale et/ou diagonale.

7. Installation selon la revendication 1,
**caractérisée en ce que**
la source d'énergie (14) est au moins un radiateur infrarouge.

8. Installation selon la revendication 7,
**caractérisée en ce que**
le ou les radiateurs infrarouges sont disposés entre le premier composant (8) et la préforme en matière plastique (3).

9. Installation selon la revendication 1,
**caractérisée en ce que**
il est prévu un autre corps réfléchissant (17).

10. Installation selon au moins une des revendications précédentes,
**caractérisée en ce que**
le deuxième composant (10) est imperméable aux rayonnements à grande longueur d'onde.

11. Installation selon la revendication 1,
**caractérisée en ce que**
il est prévu au moins un autre dispositif de maintien destiné à maintenir des préformes (3).

12. Installation selon la revendication 1,
**caractérisée en ce que**
il est prévu un dispositif de transport pour le déplacement du dispositif de maintien (22).

13. Utilisation d'une installation selon au moins une des revendications précédentes pour le chauffage de préformes en matière plastique (3).
